Europäisches Patentamt

European Patent Office

Office européen des brevets

(19)

(11) Publication number: **0 014 597**
A1

(12)

# EUROPEAN PATENT APPLICATION

(21) Application number: 80300403.5

(22) Date of filing: 12.02.80

(51) Int. Cl.³: **B 05 D 5/00**
C 09 D 9/00, C 09 D 5/00

(30) Priority: 13.02.79 GB 7904999

(43) Date of publication of application:
20.08.80 Bulletin 80/17

(84) Designated Contracting States:
AT BE CH DE FR GB IT LU NL SE

(71) Applicant: STERWIN AG.
Zeughausgasse 9
CH-6300 Zug(CH)

(72) Inventor: Ferguson, Angus Scott
Izal Limited
Chapeltown Sheffield(GB)

(74) Representative: Pennant, Pyers
Stevens, Hewlett & Perkins 5 Quality Court Chancery
Lane
London, WC2A 1HZ(GB)

(54) Method of applying and stripping paint.

(57) A novel approach to providing paint films which have satisfactory weathering resistance with good stripping properties comprises employing a paint undercoat in which the film-forming resin has an acid value of from 10 to 45 mg KOH/gm, and may be based on a copolymer of vinyl acetate or an acrylic monomer with an unsaturated carboxylic acid. Paint films including such undercoat are readily stripped by means of a paint stripper having a pH of from 8 to 14, which may include an organic solvent and/or a thickener to assist attack on the paint film.

EP 0 014 597 A1

Croydon Printing Company Ltd.

- 1 -

## METHOD OF APPLYING AND
## STRIPPING PAINT

This invention relates to a novel approach to the problem of stripping paint films from substrates. In painting a substrate it is usual to apply first a primer, to seal the substrate and provide a key for subsequent coats; then an undercoat with good covering power, to hide marks on the substrate; and then one or more top coats, to provide desired surface finish. It has been conventional to formulate the paint so that all these coats are as resistant as possible to deterioration and weathering. In particular, it has been conventional to formulate paints with film-forming resins having an acid number as low as possible, since film-forming resins with high acid numbers are well known to be subject to weathering and attack by water.

This approach to achieving weather resistance provides paint films which are difficult to strip from the substrate. Paint stripping, though very extensively performed, is tedious and time-consuming, and there is a need for paint films which can be more easily stripped than heretofore. This invention is based on the discovery that an undercoat of the paint film can be formulated in such a way that the film retains satisfactory properties of durability and weather resistance but can more readily be stripped from the substrate when required.

The invention accordingly provides in one aspect a method which comprises the steps of:-

a) applying to a substrate a paint film including an undercoat and a top coat, wherein the film-forming resin of an undercoat has an acid value of from 10 to 45 mgKOH/gm,

b) subsequently stripping the paint film from the substrate by applying a paint stripping medium comprising an alkaline material in an amount to provide a pH of from 8 to 14.

In another aspect, the invention provides a method of stripping a paint film comprising an undercoat and a top coat from a substrate by applying a paint stripping medium to the film, characterised in that the film-forming resin of an undercoat of the paint film has an acid value of from 10 to 45 mg KOH/gm, and that the paint stripping medium comprises an alkaline material in an amount to provide a pH of from 8 to 14.

This invention makes use of the well known fact that resins of significant acid value are susceptible to attack by alkali, and are indeed normally swellable or soluble in aqueous alkali. . The film-forming resin of the undercoat needs to have an acid value of at least 10 in order to be sufficiently susceptible to attack by alkali to improve stripping. Film-forming resins with acid values above 45 are so susceptible to water that their weather resistance is materially im-

0014597

paired.  As the acid value of the film-forming resin of the undercoat increases within the range 10 to 45, the weather-resistant properties of the paint film marginally deteriorate, while the ease of stripping the paint film using alkali increases.  It is surprising that an acceptable compromise can be reached, namely that the stripping properties can be markedly improved while only marginally spoiling the weathering properties of the paint film.  If the top coat of the paint film were formulated with resin having such an acid value, the weathering properties of the film would be comparatively poor; but a properly formulated top coat in a paint film protects the undercoat, so that the weather-resistant properties of the undercoat are not so critical.

It will be appreciated that, provided the paint film contains an undercoat and a top coat, the number of coats applied to the substrate is not critical.  Thus, a primer may or may not be needed.  There may be one or more undercoats, one or more of which employs film-forming resin of high acid value.  There may be one or more top coats.  The undercoat with the acid resin may be a primer.

Provided that it has an acid value in the range 10 to 45, the nature of the film-forming resin of the undercoat is not critical.  For normal air-drying paints, it is of course necessary that the resin should have a minimum film-forming temperature below ambient.  But the invention is also applicable to paints which are stoved.  Poly vinyl acetate systems may be used, in which the required acid value has been provided by copolymerising vinyl acetate with an ethylenically unsaturated carboxylic acid. Acrylic systems may be used, in which the required acid value is provided by copolymerising an acrylic ester with an ethylenically unsaturated carboxylic acid. Alkyd systems with high acid values may be used. The film-forming resin used may be a simple mixture of two or more resins, at least one of which has a significant acid value.

Apart from the presence of a film-forming resin having an acid value from 10 to 45, the undercoat paint may be conventional. It may be water- or solvent-based, and may contain pigment, extender and other conventional paint ingredients in conventional proportions. It would be possible, though not preferred, according to the invention to use an undercoat containing a film-forming resin of acid value from 10 to 45 and no pigment or extender. The paint should preferably be neutral or slightly acid, e.g. pH 5 to 7.

As indicated in the Examples below, paint films formulated using undercoats as described above can have acceptable weathering properties. However, on application of a liquid ·tripper medium containing alkali at a pH of from 8 to 14, preferably 8 to 13, the paint film as a whole or at least the undercoate portion of it becomes swollen, in such a way that the paint film can readily be stripped from the substrate. Provided that it can penetrate the top coat of the paint film through to the undercoat, the nature of the liquid medium of the paint stripper is not critical, and water-based or organic solvent-based strippers may be used. Organic solvents provide better penetration of the top coat, but are more expensive than water and inflammable, so that we generally prefer to use a solvent mixture of water and an organic solvent.  In order to ensure that the liquid stripper stays in position on or in the paint film after application it may be preferable to include a gelling agent or thickener in a proportion of up to 4%, preferably 1 to 2%, by weight, so as to provide a stripper viscosity of 200 centipoise to 20 poise.

Alkaline materials used in the paint stripper may be inorganic or organic, and are preferably present in a concentration of 1 to 20% by weight.  Suitable agents include sodium hydroxide, sodium carbonate, sodium bicarbonate, potassium hydroxide, potassium carbonate, potassium bicarbonate, ammonium hydroxide, ammonium carbonate, lithium hydroxide, triethanolamine, monoethanolamine, diethanolamine, triethylamine, pyridine and morpholine.

Organic solvents when used are preferably present in a proportion of from 10% to 95% by weight.  Suitable solvents, which should preferably be water-miscible if used in conjunction with water, are industrial methylated spirits, ethanol, n-butanol, isobutanol, iso-propyl alcohol, n-propyl alcohol, cellosolve, butyl cellosolve and butyl dioxitol.

The stripper is suitably applied to the paint film by brush and left on from 15 minutes to three hours.  Visible evidence is given by the paind film bubbling up, and when this happens the system is ready for stripping.  The softened paint is readily stripped off using a scraper.  The area is then washed down well with water.

The following Examples illustrate the invention.

<u>EXAMPLES 1 to 8</u>

Test systems were applied to sulphochromated aluminium panels 15 cm x 10 cm x 22 SWG by brush, as follows (usually each coat following one day after the previous one).

1. One coat of ICI Universal Primer.

2. One coat of undercoat, various different undercoats being used, details of which are set out in Table 1 below.

3. and 4. Two coats of ICI Silthane Magnolia Gloss.

After seven to ten days storage, the panels were divided into two sets:

Set A was placed in a weathering tank to BS 3900: F8 for 250 hours, with frequent inspection.

Set B was placed half immersed in distilled water for five days, with frequent inspection.

Finally the paint film was stripped from the aluminium panel in each case using a liquid stripper medium of the following formulation:-

Sodium hydroxide — 2% by weight

Butyl cellosolve — 12% by weight

Balance water plus a 1.5% by weight of carboxymethyl cellulose to confer desired viscosity.

In the weathering tests, the only noticeable change in 250 hours was a slight loss of gloss, more or less the same for all systems.

In the water immersion tests, the solvent type undercoats produced slight blistering at panel edges, and Durcal also produced a little blistering at brush marks. Talc produced slight hazing. Slight blistering at panel edges was also characteristic of the emulsion undercoat system. Formulations 4 to 7 of this invention, however, gave rise to markedly less blistering than did the control formulation 8, which amounted finally to ASTM Medium 4.

Paint films using undercoat formulations 1 to 7 were all readily removed by means of the alkaline stripper. The paint film based on undercoat formulation 8 was not readily removed in this way.

It is concluded that the undercoats used in these experiments have not cause any undue sensitisation to water; indeed they were, if anything, slighly superior to the conventional control. Their paint stripping properties were greatly superior to the control.

## Table 1

### Formulations

| Component | Quantity (by weight) | | |
|---|---|---|---|
| Solvent-thinned Paints | 1 | 2 | 3 |
| Mowilith Ct5 | 50 | 50 | 50 |
| Xylol | 30 | 87.5 | 40 |
| Butanol | 10 | 25 | 15 |
| Cellosolve | 20 | 20 | 30 |
| Isopropanol | 85 | 55 | 60 |
| RTC4 $TiO_2$ | 55 | 55 | 55 |
| Bentone 38 | 1 | 1 | 1 |
| Millicarb | 60 | | |
| Durcal | | 60 | |
| BLP Talc | | | 60 |

0014597

## Table 1 (Continued)

### Formulations

| Component | Quantity (by weight) | | | |
|---|---|---|---|---|
| Emulsion-base Paints | 4 | 5 | 6 | 7 |
| Emultex Alpha 38 | 125 | 125 | 125 | 62.5 |
| Emultex VV536 | | | | 62.5 |
| Dibutyl phthalate | 6 | 6 | | |
| Cellosolve | 6 | 6 | | |
| RTC4 $TiO_2$ | 62.5 | 62.5 | 62.5 | 62.5 |
| 5% Calgon S | 10 | 10 | 10 | 10 |
| Water | 65 | 55 | 52.5 | 55 |
| Millicarb | 62.5 | | | |
| Durcal | | 62.5 | | |
| BLP Talc | | | 62.5 | 62.5 |

Formulation 8 is a commercially available emulsion undercoat paint marketed by Berger Jenson and Nicholson under the Trade Mark Speedson.

Mowilith Ct5 is the Trade Mark of a copolymer of vinyl acetate and crotonic acid having an acid number of 35 to 45 and marketed by Farbwerke Hoechst AG.

Emultex Alpha 38 is the Trade Mark of an aqueous emulsion of a copolymer of vinyl acetate and crotonic acid having an acid number of 35 to 45, and marketed by Harlow Chemical Co. Ltd.

Emultex VV536 is the Trade Mark of an emulsion of a vinyl acetate/VeoVa$^{10}$ copolymer, not carboxyl containing, used to modify formulations based on Emultex Alpha 38, and also marketed by Harlow Chemical Co. Ltd.

### EXAMPLES 9 to 11

The primer formulations used for these tests are set out in Table 2 below. All are emulsion paints based on acrylic copolymers.

Adhesion of primer to alkyds and alkyds to primer Method: The primer under test was applied by brush to the centre of a 6" x 4" tin plate panel previously coated with an alkyd gloss paint. A patch in the centre of the primer was coated with an alkyd gloss paint and allowed to air dry overnight.

The painted panel was then positioned face downward over a humidity cabinet so that the painted face of the panel was exposed to constant condensation conditions and the time for blistering or loss of adhesion noted.

9: Blistering of alkyd top coat after 48 hours. The exposed primer substrate was in good condition.

10: As 9.

11: Less blistering of alkyd top coat than 9 or 10 after 48 hours. Exposed primer substrate in good condition.

## Table 2

### Paint Formulations

|                    | 9      | 10     | 11     |
|--------------------|--------|--------|--------|
| Tioxide RHD2       | 19.84  | 19.84  | 19.84  |
| Micro Talc ATI     | 19.84  | 19.84  | 19.84  |
| Calgon S 5% Soln.  | 3.18   | 3.18   | 3.18   |
| Revacryl 451       | 19.84  | 19.84  | 19.84  |
| Emultex VV536      | 19.84  | -      | -      |
| Revacryl 1A        | -      | 19.84  | -      |
| Revacryl 601       | -      | -      | 19.84  |
| Water              | 15.46  | 15.46  | 15.46  |
| Texanol            | 2.00   | 2.00   | 2.00   |
|                    | 100.00 | 100.00 | 100.00 |

Revacryl 451 is the Trade Mark of an alkali-soluble polymer of an acrylic ester and an unsaturated carboxylic acid, marketed by Harlow Chemical Co. Ltd., and having an acid number of about 80.

Revacryl 1A is the Trade Mark of an all-acrylic copolymer emulsion also marketed by Harlow Chemical Co. Ltd. Revacryl 601 is very similar.

The stripping properties of paint films using primer formulations 9, 10 and 11 were all satisfactory.

We have carried out a number of experiments with different paint strippers, i.e. using different solvents and different alkali stripping agents. The following is a selection of these tested and found to work.

a) 33 g butyl cellosolve

66 g water

10 g sodium carbonate

2 g thickener (carboxymethylcellulose type)

b) 33 g butyl cellosolve

66 g water

6 g triethanolamine

3 g thickener

c) 25 g butyl cellosolve

75 g water

10 g triethanolamine

3 g thickener

d) 10 g butyl cellosolve

90 g water

2 g sodium hydroxide

2 g thickener

e) 50 g isopropyl alcohol

0014597

              50 g water

               6 g ethanolamine

               4 g thickener

f) 50 g isopropyl alcohol

              50 g water

               6 g ammonia

               3 g thickener.

## CLAIMS

1.      A method which comprises the steps of:-

a) applying to a substrate a paint film including an undercoat and a top coat, wherein the film-forming resin of an undercoat has an acid value of from 10 to 45 mg KOH/gm,

b) subsequently stripping the paint film from the substrate by applying a paint stripping medium comprising an alkaline material in an amount to provide a pH of from 8 to 14.

2.      A method of stripping a paint film comprising an undercoat and a top coat from a substrate by applying a paint stripping medium to the film, characterized in that the film-forming resin of an undercoat of the paint film has an acid value of from 10 to 45 mg KOH/ gm, and that the paint stripping medium comprises an alkaline material in an amount to provide a pH of from 8 to 14.

3.      A method as claimed in claim 1 or claim 2, wherein the film-forming resin of the undercoat comprises a copolymer of vinyl acetate with an ethylenically unsaturated carboxylic acid.

4.      A method as claimed in claim 1 or claim 2, wherein the film-forming resin of the undercoat comprises a copolymer of an acrylic ester with an ethylenically unsaturated carboxylic acid.

5.      A method as claimed in any one of claims 1 to 4, wherein the undercoat paint has a pH of from 5 to 7.

6.      A method as claimed in any one of claims 1 to 5, wherein the paint stripping medium is water-based.

0014597

7.      A method as claimed in any one of claims 1 to 5, wherein the paint stripping medium comprises an organic solvent.

8.      A method as claimed in any one of claims 1 to 5, wherein the paint stripping medium contains 1 to 20% by weight alkali, 10 to 95% by weight water-miscible organic solvent, up to 4% by weight thickener to provide a stripper viscosity of 200 centipoise to 20 poise, any balance to 100% being water.

9.      A method as claimed in claim 8, wherein the paint stripping medium is applied to the paint film and left in position until the undercoat has softened.

10.     A method as claimed in any one of claims 1 to 9, wherein the paint stripping medium comprises an alkaline material in an amount to provide a pH of from 8 to 13.

European Patent Office

**EUROPEAN SEARCH REPORT**

Application number

EP 80 30 0403

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | GB - A - 903 675 (LEICESTER, LOVELL & CO.)<br><br>  * Claims 1,3; examples 1,2; page 2, lines 80-82 *<br><br>-- | 1-3,6 | B 05 D 5/00<br>C 09 D 9/00<br>5/00 |
| X | CHEMICAL ABSTRACTS, vol. 84, no. 2, 12th January 1976, page 100, no. 6655y<br>Columbus, Ohio, U.S.A.<br><br>& JP - A - 75 89427 (KANSAI PAINT CO., LTD.) 17-07-1975<br>  * Abstract *<br><br>-- | 1,2,6 | |
| X | CH - A - 399 260 (POLYMER CORP.)<br>  * Claims; page 3, example 3 *<br><br>-- | 1 | TECHNICAL FIELDS SEARCHED (Int.Cl. 2)<br><br>B 05 D   5/00<br>7/24<br>3/10<br>C 09 D   5/00<br>5/20<br>9/00<br>3/74<br>C 08 L 101/08<br>31/04 |
| | US - A - 2 827 439 (BEN HELPER et al.)<br>  * Claim 1; column 1, lines 45-62 *<br><br>---- | 6-8,10 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 07-05-1980 | DE ROECK |

EPO Form 1503.1   06.78